# EUROPEAN PATENT APPLICATION

(11) **EP 4 714 578 A1**
(43) Date of publication of application: **25.03.2026**
(21) Application number: 24201026.2
(22) Date of filing: 18.09.2024
(51) Int. Cl.: B23B 51/08, B23B 51/12, B25B 13/06, B25B 21/00

(54) **COMBINED DRILLING AND SCREWING TOOL**

(71) Applicant: Hilti Aktiengesellschaft, 9494 Schaan (LI)
(72) Inventor: Plaschkes, Ran, 86916 Kaufering (DE); Britz, Rory, 82319 Starnberg (DE)
(74) Representative: Hilti Aktiengesellschaft Corporate Intellectual Property

(57) **Abstract**

Combined drilling and screwing tool, comprising a drill (2) provided with a proximal clamping shank portion (1) for producing a pilot hole (500) for the insertion of a screw (400) into a workpiece (600), wherein a screw sleeve arrangement coaxially surrounding the drill (2) and non-rotatably connected thereto is provided for screwing the screw (400) into the pilot hole (500), the distal end of which screw sleeve arrangement is provided with screwing means for receiving a screw head, wherein the screw sleeve arrangement is composed of a main part (3) and a sliding sleeve part (4) telescopable therefrom, wherein the main part (3) is attached to the drill (2) in a rotationally fixed manner by the proximal end and can be connected to the sliding sleeve part (4) in a rotationally fixed manner by the distal end via an unlockable locking mechanism (5), so that in the retracted state of the sliding sleeve part (4) the protruding drill bit (2) can be inserted, whereas in the extended state of the sliding sleeve part (4) the screw means formed thereon can be used.

## Description

The present invention relates to a combined drilling and screwing tool comprising a drill provided with a proximal clamping shank portion for making a pilot hole for the insertion of a screw into a workpiece, wherein a screw sleeve arrangement coaxially surrounding the drill and non-rotatably connected thereto is provided for subsequently screwing the screw into the pilot hole, the distal end of which is provided with screwing means for receiving a screw head.

The field of the invention extends primarily to hand-held power tools, in particular electric drills or hammer drills. The combined drilling and screwing tools of interest here are used in order to be able to carry out both a pilot hole for the insertion of a screw and the subsequent screwing in of the screw with one and the same hand-held machine tool, which make it possible to carry out the above-mentioned sequence of operations with the same hand-held machine tool without changing tools.

### State of the art

Document DE 92 06 395 U1 discloses a combined drilling and screwing tool of the same type. This comprises a screw sleeve arrangement, referred to here as a screw cylinder, which encloses a drill shaft with a drill bit in order to screw in the screw in an extended state with a distal hexagon socket, the pilot hole of which was previously made with the integrated drill bit in the retracted state of the screw cylinder. The special screw cylinder has the shape of a circular hollow cylinder and is provided with an elongated, slot-like guide groove, which is connected to positioning/hooking grooves, which are arranged separately from each other at right angles to the elongated guide groove at one of the two ends. A guide groove is arranged inside the screw cylinder perpendicular to its longitudinal axis along the inner lateral surface of the screw cylinder, with the guide groove also being extended out of the screw cylinder in the axial direction of the same, so that an insertion and removal movement along the guide groove does not form a straight line with the elongated guide groove.

The drill shaft, which can be enclosed by this screw cylinder, has a protruding pin at its front end, which allows the drill shaft to be pushed into the screw cylinder and the protruding pin to be moved along the guide groove against a spring return force. The drill is mounted coaxially on the drill shaft at the front end. The positioning/engaging grooves and the protruding pin are designed in such a way that the pin can engage in the respective one of the two positioning/engaging grooves and thus enables the drill bit to protrude out of the screw cylinder when retracted and to be retracted into the screw cylinder when extended.

This previously known technical solution of a combined drilling and screwing tool is quite long due to the coaxial arrangement of the drill shaft and drill bit. In addition, the outwardly open guide groove provides little protection against dirt from the environment, in particular drilling residues, which can lead to jamming of the groove-guided sliding mechanism.

The generally known state of the art also includes combined drilling and screwing tools, which have a multi-part design and can be plugged together to perform the drilling and screwing function. Usually, a drill bit is first inserted into the drill chuck of the hand tool. The user drills the required pilot holes at the desired embedment depth. A connecting tube serving as a screw sleeve assembly is then pushed over the drill. The connecting tube communicates with a hexagonal drive to secure it to the drill bit and deliver the screw torque. The user then screws the screw into the pilot hole using the connecting tube.

To carry out the various work steps, the user has to assemble and disassemble components of this multi-part system several times, which is associated with a correspondingly high workload.

It is therefore the object of the present invention to further improve a combined drilling and screwing tool of the type according to the present invention in such a way that it enables fast and precise work without replacing components.

### Disclosure of the invention

The problem is solved on the basis of a combined drilling and screwing tool according to the generic term of claim 1 in conjunction with its characterizing features. The following dependent claims describe advantageous further embodiments of the invention.

The invention includes the technical teaching that the screw sleeve arrangement of a combined drilling and screwing tool comprises a main part and a sliding sleeve part telescopable therefrom, wherein the main part is non-rotatably attached to the drill with the proximal end, and with the distal end being non-rotatably connectable to the sliding sleeve part via an unlockable locking mechanism, so that in the retracted state of the sliding sleeve part the protruding drill bit can be inserted into the power tools chuck, whereas in the extended state of the sliding sleeve part the drill bit is covered, the sliding sleeve part exposes a connection to the screw head and the screwing means - for example a hexagon socket - can be used.

An advantage of the solution according to the invention lies in the fact, that the impact is directly applied to the drill bit. By this a good drilling performance can be reached.

A further advantage of the solution according to the invention lies in particular in the fact that the user can clamp the combined drilling and screwing tool once in the tool holder of a hand-held machine tool and, by actuating the sliding sleeve part of the screw sleeve arrangement, can switch at will between the functionality of pre-drilling and the functionality of screwing within a short time, whereby the respective function can be carried out with a high level of operating and working safety thanks to the locking mechanism. Since all components of the combined drilling and screwing tool according to the invention are connected to each other in a self-contained manner, there is no need to replace individual components. However, as an extension of the basic idea of the invention, different variants of drill diameters and wrench widths can be used.

Easy handling results from the fact that the drill bit is exposed for pre-drilling by simply pulling the telescopic sliding sleeve part back over the main part of the screw sleeve arrangement in order to achieve the required embedment depth. The sliding sleeve part slides in the direction of the tool holder until this has reached a rear position, which preferably corresponds to an end position locking position. In this case, the distal end of the sliding sleeve part acts as a drilling depth stop. If the user then wants to insert a screw into the pilot hole, the sliding sleeve part is moved away from the tool holder until it engages in the extended position by the locking mechanism. As the distal end of the sliding sleeve part protrudes beyond the drill tip in this extended state, a screw means formed on it, preferably a hexagon socket, is exposed, allowing a screw head of the screw to be screwed in to be gripped. As an alternative to a hexagon socket, the screw means can also have other geometric structures that correspond to the usual screw head geometries.

According to a further measure improving the invention, it is proposed that the rotationally fixed connection of the main part of the screw sleeve arrangement to the drill bit is also realized by means of an unlockable locking mechanism. This allows the drill bit to be replaced separately and, if necessary, exchanged for a drill bit of a different diameter. The exchange can be made possible by overcoming a spring-generated retaining force, so that the drill bit remains securely connected to the screw sleeve assembly in its normal state. In other words, the screw sleeve assembly is removed from the drill first by pulling. The pulling force overcomes the unlockable locking mechanism. Then the drill become "naked", and can be removed from the power tools chuck.

The unlockable locking mechanism between the sliding sleeve part and the main part of the screw sleeve assembly as well as between the main part of the screw sleeve assembly and the drill are preferably designed in the manner of a ball locking mechanism known per se or in the manner of a spring clip locking mechanism known per se. This allows the desired connection state to be realized easily and reliably.

Preferably, the unlockable locking mechanism between the drill and the main part has several radial spring-loaded locking balls that are accommodated along the circumference of the main part and each interact with a ball recess on the drill. Unlocking takes place - as described above - by overcoming the spring force acting on the locking balls.

In contrast, the unlockable locking mechanism between the main part and the sliding sleeve part can be unlocked manually via an external longitudinally adjustable actuating sleeve. For this purpose, several locking balls are provided along the circumference of the sliding sleeve part, which are received in corresponding radial through-holes and communicate with corresponding ball recesses on the main part, the locked position of which is secured by engagement in the ball recesses via the outer longitudinally adjustable actuating sleeve. If the actuating sleeve is displaced, a ramp structure allows the locking balls to slide out of the ball recesses so that the sliding sleeve part can be moved relative to the main part. Preferably, the same locking capability is also provided in the area of the proximal end, i.e. in the retracted state, of the sliding sleeve part.

According to a preferred embodiment, the adjustable actuating sleeve can unlock when being pushed forward, e.g. when switching to extended state, or pulled backward, e.g. when switching to retracted state.

According to a further measure improving the invention, it is proposed that at least one further circumferential row of ball recesses with an associated scale for setting different drilling depths is also realized between the proximal and distal ball recesses. This allows the pilot holes for different screw lengths to be drilled more precisely.

According to a preferred embodiment, the main components of the screw sleeve arrangement according to the invention, namely the main part and the telescopic sliding sleeve part thereof, are made of a steel material and are hollow-cylindrical in their basic shape.

According to a further measure improving the invention, it is proposed that the main part has at least one flattened portion running longitudinally on the outside, which interacts with a corresponding flattened portion running longitudinally on the inside on the sliding sleeve part to form a torque transmission between the components, which are hollow cylindrical in the basic shape.

### Detailed description based on drawing

Further measures improving the invention are shown in more detail below together with the description of a preferred embodiment of the invention with reference to the figures. It shows:
- Fig. 1A: a perspective view of a combined drilling and screwing tool in the retracted state of the sliding sleeve part for making a pilot hole,
- Fig. 1B: the combined drilling and screwing tool as shown in Fig. 1A in the clamped state in a hand-held power tool,
- Fig. 2A: a perspective view of a combined drilling and screwing tool in the extended state of the sliding sleeve part for setting a screw,
- Fig. 2B: the combined drilling and screwing tool as shown in Fig. 2A in the clamped state in a hand-held power tool,
- Fig. 3: a longitudinal section through a screw sleeve arrangement before mounting it on the drill bit attached to the hand-held power tool,
- Fig. 4a: perspective view of the drilling and screwing tool with additional intermediate markings, and
- Fig. 5a to 5f: a sequence of longitudinal sections of the combined drilling and screwing tool according to the invention for carrying out the working steps from the production of a pilot hole in different depths to the screwing in of a screw for different screws lengths.

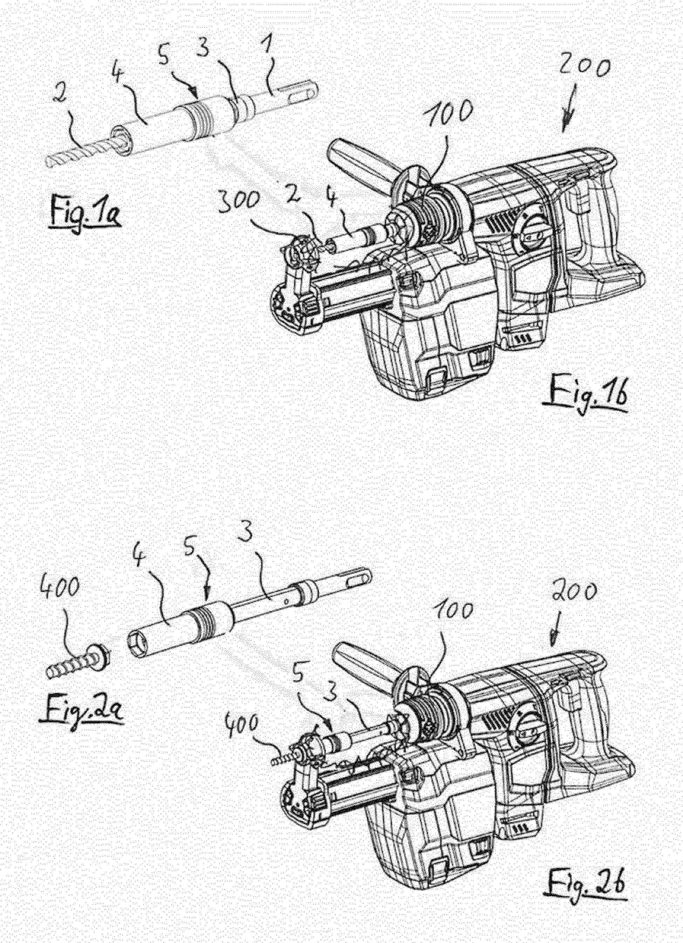

According to Fig. 1a, an exemplary combined drilling and screwing tool essentially consists of a drill bit 2 provided with a proximal clamping shank section 1, which is provided with a screw sleeve arrangement coaxially surrounding the drill bit 2, which is composed of a main part 3 and a telescopic sliding sleeve part 4. In the retracted state of the sliding sleeve part 4 shown, the drill bit 2 protrudes, allowing a pilot hole to be drilled. The retracted state of the sliding sleeve part 4 is secured by an unlockable locking mechanism 5.

According to Fig. 1b, the combined drilling and screwing tool described above is clamped in a tool holder 100 of an electric hand-held machine tool 200 designed as an impact drill when the sliding sleeve part 4 is retracted and the drill bit 2 is protruding. The drill bit 2 passes through a dust extraction device 300.

According to Fig. 2a and Fig. 2b, the combined drilling and screwing tool described above is shown in the extended state of the sliding sleeve part 4, in which the screwing means formed distally thereon in the form of an internal hexagon can be used for screwing in a screw 400 via its screw head. To screw in the screw 400, the proximal end of the main part 3 is fixed to the drill - which is located on the inside in this case - and the distal end is fixed to the sliding sleeve part 4 that connect to the main part 3 via the unlockable locking mechanism 5.

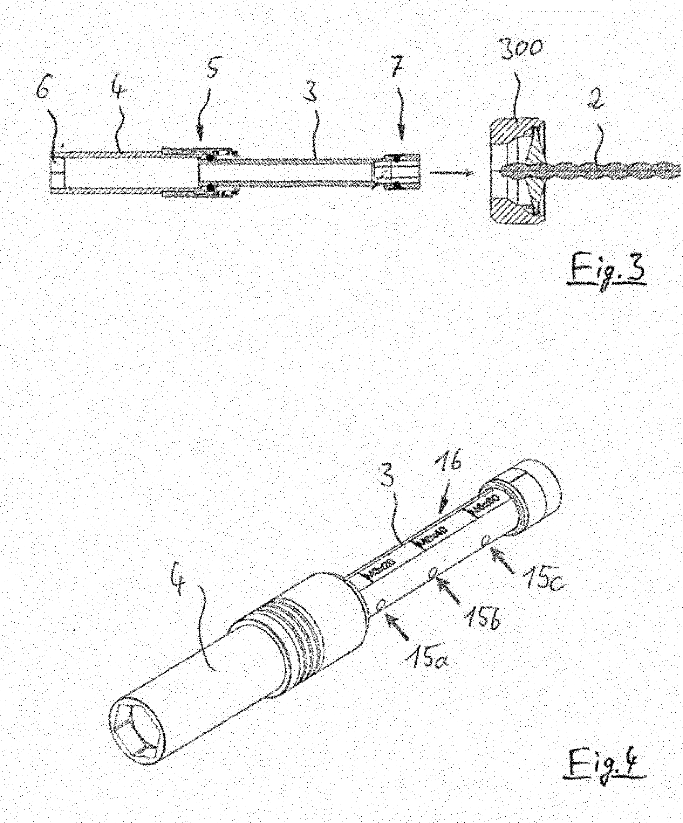

According to Fig. 3, the non-rotatable connection of the main part 3 of the screw sleeve arrangement to the drill bit 2 is also realized by an unlockable locking mechanism 7. In this design example, a non-rotatable connection between the drill 2 and the main part 3 of the screw sleeve arrangement is also realized in a form-fit manner using a hexagonal drive. Both the main part 3 and the telescopic sliding sleeve part 4 are made of a hollow cylindrical steel material. The screw sleeve arrangement can be placed on the already clamped drill bit 2 in the axial direction shown via a front ring of the dust extraction device 300 of the hammer drill - not shown here.

According to Fig. 4, several spherical recesses 15a to 15c, each with an associated scale 16 for setting different drilling depths, are realized between the proximal and the distal end of the sliding sleeve part 4.

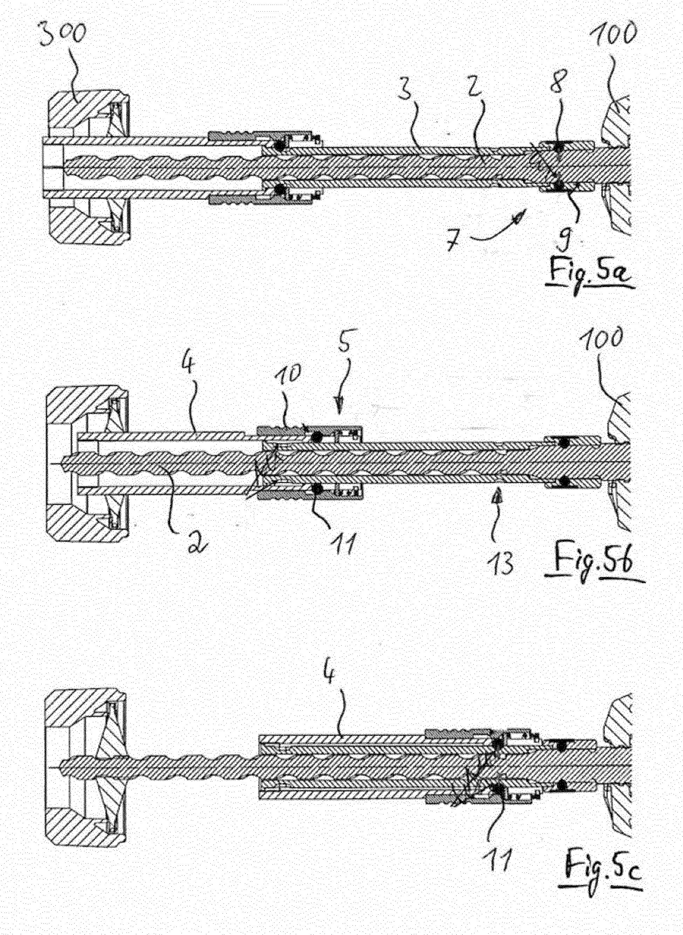

According to Fig. 5a, the hexagonal drive formed on the inside of the main part 3 of the screw sleeve arrangement is fitted onto a corresponding hexagon on the drill 2, whereby locking balls 8 of the unlockable locking mechanism 7 provided between the drill 2 and the main part 3 engage in associated ball recesses on the drill 2 and are pressed radially inwards by the tension spring collar 9 arranged on the main part 3.

In order to switch to drilling mode as shown in Fig. 5b, the user pulls the actuating sleeve 10 in the direction of the tool holder 100 until ramp recesses on the inside of an actuating sleeve 10 of the unlockable locking mechanism 5 allow it to move radially outwards. The force of the user's hand is transmitted from the actuating sleeve 10 to the locking balls 11, which are consequently forced to slide out of the corresponding ball recesses so that the tip of the drill bit 2 is exposed.

According to Fig. 5c, the sliding sleeve part 4 is fully retracted into the retracted state, with the locking balls 11 engaging in ball recesses 13 provided on the proximal end of the main part 3 in order to bring about locking in this retracted state of the sliding sleeve part 4. In this position, the distal end of the sliding sleeve part 4 forms a depth stop for the drill bit 2.

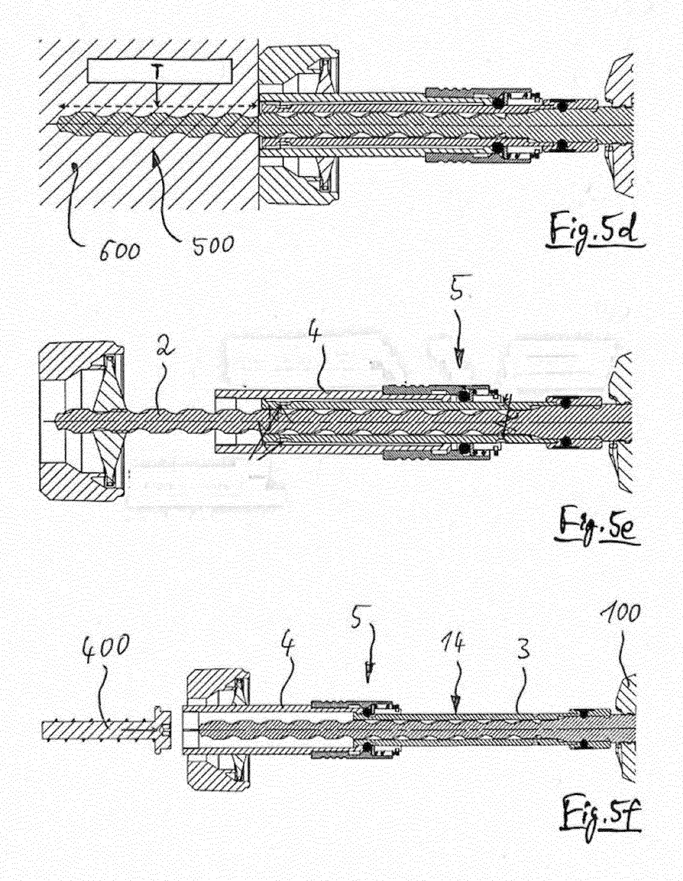

According to Fig. 5d, a pilot hole 500 can then be drilled in a workpiece 600 with a defined embedment depth T.

According to Fig. 5e, the the actuating sleeve 10 is pushed forward to switch to the screwing mode after the drill bit 2 has been pulled out of the pilot hole 500, after the locking mechanism 5 has been actuated. The sliding sleeve part 4 moves into the extended state for use of the screwdriving means formed on it. In more detail: When sleeve 10 is pushed forward the sleeve 4 is pushed forward too. The spring in the back is compressed applying force on the toothed washer. The movement of the sleeve 10 exposes again the ramp recesses over the locking balls. The force from the washer is being transferred to the locking balls forcing them to move radially out of the locking channels in main part 3.

When sleeve 4 moves to front position it locks again to body 3 by the locking balls. The spring force pushes the balls into the channels located in body 3. Both sleeve 4 and body 3 are now secured together. As illustrated in Fig. 5f, the front end of the sliding sleeve part 4 is used to screw the screw 400 into the pilot hole - not shown further here - with screw means formed therein, an internal hexagon. By locking the locking mechanism 5, there is a non-rotatable connection between the tool holder 100 and the sliding sleeve part 4, so that the required screwing torque can be transmitted.

To transmit the screwing torque, the main part 3 of the screw sleeve arrangement has a flattened section 14 running longitudinally on the outside, which interacts with a corresponding flattened section running longitudinally on the inside of the sliding sleeve part 4 to form a torsionally rigid connection.

The invention is not limited to the above preferred embodiment. Rather, further variations thereof are also conceivable, which are included in the scope of protection of the claims. For example, it is also possible to fasten the screw sleeve arrangement on the drill and to reduce the axial movement by using an expandable spring clip instead of a locking mechanism consisting of locking balls and spring collars on the drill side. Such spring clips can be arranged in an internal slot so that they can expand during use. In this case, the clip-like expandable spring clips sit on the entire circumference of the drill bit and hold it firmly, which additionally increases the safety of the combined drilling and screwing tool.

### List of reference symbols

- 1: Clamping shank section
- 2: Drill
- 3: Main part
- 4: Sliding sleeve section
- 5: Locking mechanism
- 6: Internal hexagon
- 7: Locking mechanism
- 8: Locking ball
- 9: Spring collar
- 10: Actuating sleeve
- 11: Locking ball
- 12: Ball recess
- 13: Ball recess
- 14: Flattening
- 15: Ball recess
- 16: Scale

- 100: Tool holder
- 200: Hand-held machine tool
- 300: Dust extraction device
- 400: Screw
- 500: Pilot bore
- 600: Workpiece

## Claims

1. Combined drilling and screwing tool, comprising a drill (2) provided with a proximal clamping shank portion (1) for producing a pilot hole (500) for the insertion of a screw (400) into a workpiece (600), wherein a screw sleeve arrangement coaxially surrounding the drill (2) and non-rotatably connected thereto is provided for screwing the screw (400) into the pilot hole (500), the distal end of which screw sleeve arrangement is provided with screwing means for receiving a screw head, **characterized in that** the screw sleeve arrangement comprises a main part (3) and a sliding sleeve part (4) which can be telescoped therefrom, the main part (3) being attached to the drill (2) with the proximal end in a rotationally fixed manner, and with the distal end being non-rotatably connectable to the sliding sleeve part (4) via an unlockable locking mechanism (5), so that in the retracted state of the sliding sleeve part (4) the protruding drill bit (2) can be inserted, whereas in the extended state of the sliding sleeve part (4) the screwing means formed thereon can be used.

2. Combined drilling and screwing tool according to claim 1,
**characterized in that** the drill (2) is designed for clamping in the machine tool (100),

3. Combined drilling and screwing tool according to claim 1 or 2,
**characterized in that** the non-rotatable connection of the main part (3) of the screw sleeve arrangement to the drill (2) is also implemented by a releasable locking mechanism (7).

4. Combined drilling and screwing tool according to one of claims 1 to 3,
**characterized in that** the locking mechanism (5; 7) is designed in the manner of a ball locking mechanism or in the manner of a spring clip locking mechanism.

5. Combined drilling and screwing tool according to one of the preceding claims, **characterized in that** the screwing means formed at the distal end of the sliding sleeve part (4) are designed as an internal hexagonal structure (6).

6. Combined drilling and screwing tool according to claim 5,
**characterized in that** the unlockable locking mechanism (7) between the drill bit (2) and the main part (3) comprises a plurality of radially spring-loaded locking balls (8) which are accommodated along the circumference of the main part (3) and interact with a respective ball recess on the drill bit (2).

7. Combined drilling and screwing tool according to one of the preceding claims, **characterized in that** the unlockable locking mechanism (5) between the main part (3) and the sliding sleeve part (4) comprises a plurality of locking balls (11) which are accommodated along the circumference of the sliding sleeve part (4), interact with corresponding ball recesses (12) at the at least distal end of the main part (3) and can be unlocked via an outer longitudinally adjustable actuating sleeve (10).

8. Combined drilling and screwing tool according to claim 7,
**characterized in that** the adjustable actuating sleeve (10) can unlock when being pushed forward (e.g. when switching to extended state) or pulled backward (e.g. when switching to retracted state).

9. Combined drilling and screwing tool according to claim 7 or 8,
**characterized in that** corresponding ball recesses (13) are also provided in the region of the proximal end of the main part (3) in order to lock the sliding sleeve part (4) in the retracted position, the distal end of the sliding sleeve part (4) forming a depth stop for the drill bit (2).

10. Combined drilling and screwing tool according to one of the preceding claims, **characterized in that** between the proximal and the distal ball recesses (12, 13) at least one further circumferential row of ball recesses with an associated scale for setting different drilling depths is provided.

11. Combined drilling and screwing tool according to one of the preceding claims, **characterized in that** the main part (3) made of a steel material and the sliding sleeve part (4) are hollow cylindrical.

12. Combined drilling and screwing tool according to claim 11,
**characterized in that** the main part (3) has at least one flattened portion (14) extending longitudinally on the outside, which cooperates with a corresponding flattened portion extending longitudinally on the inside on the sliding sleeve part (4) to form a torque transmission.
